# EUROPEAN PATENT APPLICATION

(11) **EP 2 306 378 A1**
(43) Date of publication of application: **06.04.2011**
(21) Application number: 09305886.5
(22) Date of filing: 23.09.2009
(51) Int. Cl.: G06Q 10/00

(54) **System and method for settling the payment of a travel e-ticket**

(71) Applicant: Amadeus S.A.S., 06410 Biot (FR)
(72) Inventor: Hourdou, Nicolas, Hong-Kong (HK); Ruy, Thibaut, 06410, Biot (FR)
(74) Representative: Decobert, Jean-Pascal

(57) **Abstract**

A system for settling the payment of a travel e-ticket of a transportation carrier **characterized in that** it comprises: data storage means for storing passenger name records (PNR) in a database (110); means for identifying passenger name records (PNRs) that are eligible for a late payment (PAB) service in said database (110), each passenger name record (PNR) being associated to at least one segment, means for detecting (160) when a predetermined event occurs prior to transportation carrier departure, a server associated to said database (110) and arranged for retrieving (172) from said database (110) all passenger name records (PNRs) eligible for the late payment (PAB) service; means for selecting (130) through an algorithm at least one segment that can be priced for each retrieved passenger name record (PNR); means for pricing (130, 120) said segment; means for issuing (PPP) (130) a coupon associated to said segment; means for updating said database (136) with issuance information concerning said segment; means for voiding all travel coupons (142) for which no change of coupon status has been reported by an airport departure control system (DCS) (180) handling the carrier departure; means for receiving from the airport departure control system (DCS) (180) a change of coupon status indicating that the coupon has been used (144), then triggering a reporting (144) of the segments for which a change of coupon status has been reported by departure control system (DCS) (180); means for settling the payment of coupons (150) for which change of status has been reported on the basis of the prices determined by the means for pricing (125).

## Description

### FIELD OF THE INVENTION

The present invention relates generally to the pricing and the payment settlement of travel tickets and more specifically to a system and method to delay payment settlement until travelers are actually boarding passenger transportation carriers.

### BACKGROUND OF THE INVENTION

Planning a trip well in advance is always, when feasible, a good practice to benefit of a larger choice of available travel opportunities at interesting prices. Leisure travelers have indeed generally the freedom of planning holidays and vacations long before departing for known dates that are not likely to change.

On the contrary, business travelers are more constrained to decide on when and where they have to meet, e.g., their clients, attend important meetings scheduled at the last minute, and accommodate unexpected events like delays and cancellations while traveling. Planning of a business trip is often a challenge assuming the resolution of conflicting requirements and the accommodation of a good deal of uncertainties. In spite of these difficulties booking of the trip must be accomplished early enough to expect a successful completion of the travel reservation at a reasonable price.

However, the standard practice of providers of travel services and carriers, e.g., airlines, is that any reservation is finalized and charged to the client at booking time. After booking, cancellations and changes are ruled by the specific airlines policies. Refund of a ticket may be only obtained if cancellation is done early enough prior to departure. Changes are often subject to penalties. More drastic rules may even apply to low-cost tickets which are generally just non-changeable and non-refundable. Hence, if a refund can be eventually expected, the price of a trip is however always fully charged to the client at booking time and the carrier credited for the sale at the same time.

Business travelers and other frequent travelers who are more likely than casual travelers susceptible to change or cancel part or totality of an itinerary must then be ready to pay for unused tickets, or part of, unless they were able to cancel it. However, in any case, this has to be done well before departing time to have a chance to be later partially or totally refunded according to airline rules applying to the tickets considered. Moreover, business travelers are often corporate travelers traveling for their respective companies. If they must change or cancel part or totality of a business trip they have not only to deal with the airline or travel service provider but they have also to provide justifications to their employers to be refunded of their actual trip expenses possibly taken into consideration the anticipated refunds from the airlines.

The management of changes and cancellations of part or totality of trips thus becomes quite complex for all parties involved:
- The traveler him/herself is first concerned. He/she must deal with the carrier or travel providers and, possibly, for a corporate traveler, with his/her employer too. Cancellations and changes must be done well in advance to obtain a refund after booking. This is in contradiction with the practical difficulties a business traveler has to deal with when planning and during a business trip.
- The revenue accounting of the carrier is impacted as well. If it is credited at booking time for the selling of a trip, it has later to reimburse a cancelled trip or trip segment.
- The third party involved is the global distribution system (GDS) supporting the airline. Indeed, most of the time, travelers and carriers have, directly or indirectly, recourse to a GDS. A few worldwide GDSs provide, from large storage and computing centers, support and travel services to all the actors of the travel industry around the world. This includes, on one hand, the carriers, e.g., the airlines, and on the other hand, the traditional or online travel agencies that interface with the travelers. Such a GDS is for example AMADEUS, a European travel service provider with headquarters in Madrid, Spain. Then, cancellations and changes done to the trips generate many more data exchanges between the parties involved requiring GDS to have to set up more storage capacity and processing power to support its affiliated airlines and travel agencies.

In view of the above difficulties it is therefore an object of the invention to simplify issuance and payment settlement of travel tickets especially in case there are good chances that the traveler cannot board.

More precisely one objective of the invention is to avoid charging the passenger for trips, or trip segments, not accomplished and prevents airline to be credited for trips that will have to be otherwise refunded.

Further objects, features and advantages of the present invention will become apparent to the ones skilled in the art upon examination of the following description in reference to the accompanying drawings. It is intended that any additional advantages be incorporated herein.

### SUMMARY OF THE INVENTION

The above objects are fulfilled by the invention which provides a method for settling the payment of a travel e-ticket of a transportation carrier. The method comprises the following steps:
- identifying passenger name record (PNR) passenger name records (PNRs) that are eligible for a late payment (PAB) service in a passenger name records database, each passenger name record (PNR) being associated to at least one segment,
when a predetermined event occurs prior to transportation carrier departure,
- retrieving from the passenger name record (PNR) database all passenger name records (PNRs) eligible for the late payment (PAB) service passenger name record (PNR);
- for each retrieved passenger name record (PNR), selecting through an algorithm at least one segment that can be priced;
- pricing said segment;
- issuing a coupon associated to said segment;
at issuance, updating the passenger name record (PNR) database with issuance information concerning said segment;
upon completion of boarding,
- voiding all travel coupons passenger name record (PNR) for which no change of coupon status has been reported by an airport departure control system (DCS) handling the carrier departure;
- receiving from the airport departure control system (DCS) a change of coupon status indicating that the coupon has been used, then triggering a reporting passenger name record (PNR) to a transactions and sales reporting module (TSR) passenger name record (PNR) of segments for which a change of coupon status has been reported by departure control system (DCS);
- settling the payment of coupons passenger name record (PNR) for which a change of status has been reported on the basis of the prices determined at pricing step.

Therefore, the invention offers an efficient method that allows debiting the passenger only in case that he actually boards. Besides, this method limits the number of data exchanges, the storage capacity and the processing power that are usually required to reimburse a passenger in case the coupon is not used. Moreover, the carrier has a greater visibility of the revenue that will be actually earned.

The method also includes the following optional features:
The method comprises a further step of reporting to a transportation carrier accounting system the payment settlement passenger name record (PNR) of the coupons for which a change of coupon status has been reported by the airport departure control system (DCS). The method also comprises a further step of reporting to a transportation carrier accounting system the voiding of the coupons for which no change of coupon status has been reported by the airport departure control system (DCS).

The predetermined event consists in entering a predetermined time window. Alternatively, the predetermined event consists in beginning the passenger check-in.

The various steps are carried out by different modules communicating via EDIFACT messages.

The change of coupon status indicating that the coupon has been used is received passenger name record (PNR) at a coupon database (CDB) passenger name record (PNR) of an electronic-ticket server, wherein the coupon database (CDB) passenger name record (PNR) notifies passenger name record (PNR) the change of coupon status to the transactions and sales reporting module (TSR) passenger name record (PNR) which launches the payment settlement and the reporting of said settlement to the transportation carrier.

The departure control system (DCS) notifies the coupon database (CDB) of the change of coupon status through a standard coupon status update.

Upon issuance of a coupon associated to a passenger name record (PNR) eligible for the late payment (PAB) service, a dedicated tag is associated to said coupon. When a change of any coupon status is received at a coupon database (CDB) of an electronic-ticket server, the electronic-ticket server checks whether the coupon carries said tag. In case said tag is identified then the electronic-ticket server notifies the change of coupon status to the transactions and sales reporting module (TSR) for further payment settlement and reporting.

The step of selecting segments to be priced may include performing a selection of segments that correspond to a same e-ticket on the basis of:
- whether said segments correspond to flights that are domestic or international flights,
- an available transfer time between connecting flights.
- whether origins and destinations of travel segments match or not.

A computer program product stored on a computer readable storage medium, comprising computer readable code means for causing at least one computer to operate the method of any one of previous features.

The invention also describes a system for settling the payment of a travel e-ticket of a transportation carrier. Said system comprises:
- data storage means for storing passenger name records (PNR) in a database;
- means for identifying passenger name records (PNRs) that are eligible for a late payment (PAB) service in said database, each passenger name record (PNR) being associated to at least one segment,
- means for detecting when a predetermined event occurs prior to transportation carrier departure,
- a server associated to said database and arranged for retrieving from said database all passenger name records (PNRs) eligible for the late payment (PAB) service;
- means for selecting through an algorithm at least one segment that can be priced for each retrieved passenger name record (PNR);
- means for pricing said segment;
- means for issuing (PPP) a coupon associated to said segment;
- means for updating said database with issuance information concerning said segment;
- means for voiding all travel coupons for which no change of coupon status has been reported by an airport departure control system (DCS) handling the carrier departure;
- means for receiving from the airport departure control system (DCS) a change of coupon status indicating that the coupon has been used, then triggering a reporting of the segments for which a change of coupon status has been reported by departure control system (DCS);
- means for settling the payment of coupons for which change of status has been reported on the basis of the prices determined by the means for pricing.

### BRIEF DESCRIPTION OF THE DRAWINGS

FIGURE 1 shows an example of system and of environment in which the invention is carried out.
FIGURE 2 shows the steps of the method according to an embodiment of the invention.
FIGURE 3 describes an exemplary algorithm of the invention used by the issuance plug-in of the pricing and payment portal (PPP) for selecting the segments of a passenger itinerary eligible for pay-as-you-board service.
Figure 4 describes another exemplary algorithm of the invention for selecting the segments of a passenger itinerary eligible for pay-as-you-board service which applies when the first segment is an international segment.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

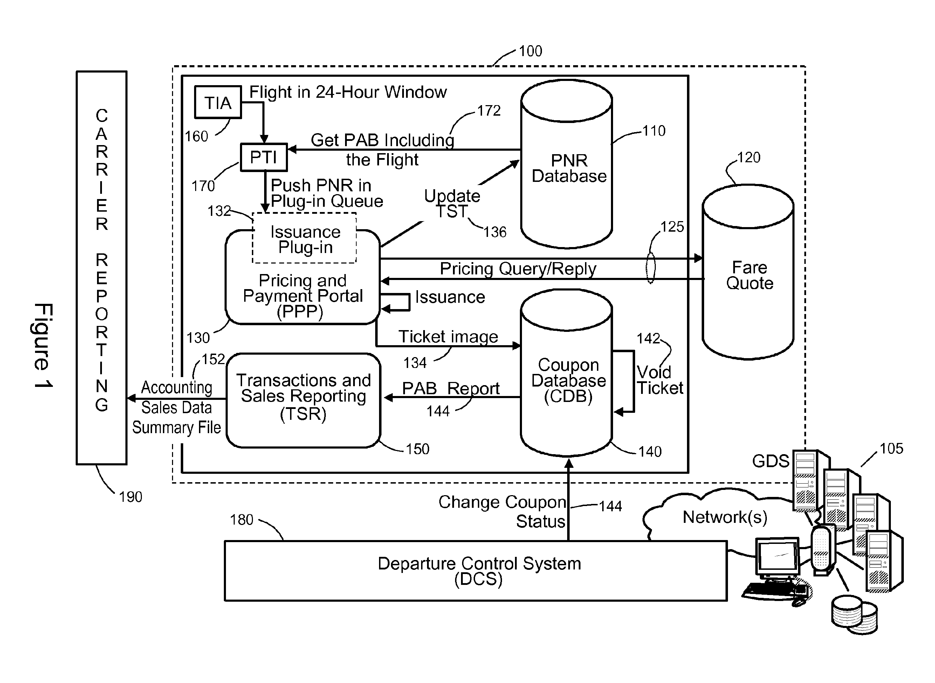

FIGURE 1 shows a typical system and the environment in which the invention is carried out. Such a system 100 is generally implemented from the large computing, storing and networking resources 105 put in place by any GDS as discussed in the background section. GDSs provide the necessary services and support to all actors of the travel industry. This includes airline companies, traditional and online travel agencies, and airports so that the professionals of this industry (airline agents, travel agents, etc.) can better serve their clients, i.e., the travelers and airline passengers.

Any GDS implements a reservation system which holds all the necessary information on the passengers having booked a trip. This is done under the form of a structured booking record (SBR) mostly referred to as passenger name record (PNR) in the travel industry. This later term is used throughout the following description of the invention.

Any standard reservation system thus includes a PNR database, a server and a processing unit arranged to handle all active PNRs 110.

The processing of a passenger reservation also implies to get the price of the corresponding trip. This is achieved by interrogating a fare quote system 120 comprising a server and data storage means for storing all fares and fare categories offered by the airlines affiliated to the GDS. In the context of the invention where a passenger is only charged for the travel itinerary segments he/she has actually flown, the fare quotation system is assumed to be capable of quoting separately all individual itinerary segments. Each flight of an itinerary is commonly designated segment.

The fare quote system 120 is an integral part of the GDS computing resources 105 so that it can be efficiently queried and have fare quotations promptly delivered 125 to the reservation system through its pricing and payment portal designated in the following by its acronym PPP 130.

The reservation system also includes a server and a database of the electronic tickets (e-tickets) and coupons corresponding to each segment of a passenger itinerary. Indeed, all airline tickets are now dematerialized so that ticket images are stored in a database. This e-ticket server and its database are referred to as CDB which stands for coupon database 140. The CDB is arranged to store e-ticket coupons and to support follow up actions on e-tickets Then, tickets and coupons can be easily changed, e.g., voided 142 to allow implementing the invention so as to charge only passengers that have actually flown part or totality of an itinerary.

To this end, CDB can be updated from a system of an airport that is configured to perform traveler check-in and boarding. Such system is commonly designated departure control system or DCS 180. Each airport implements a DCS to allow airline agents to perform check-in and boarding of their passengers. Hence, in a system according to the invention, coupon status changes 144 can be received at boarding time at the CDB. Then, the DCS triggers an update of the coupon status hold in the CDB once the coupon has been actually used, i.e. once the passenger actually boards.

The late payment service process itself is triggered by a time initiated action or TIA module 160. This late payment service is designated in the following pay-as-you-board service or PAB service. TIA is a customizable module that is configured to start PAB process in a predefined time frame prior to a specific event, e.g., a scheduled flight departure date and time. Typically, a 24-hour window is implemented. Alternatively, PAB process could be triggered in a time frame no later then the earliest time at which passenger check-in of a flight begins.

Then, TIA is arranged to activate in turn a module designated publisher by TIA or PTI module 170. This PTI module is in charge of filtering among all concerned PNRs (i.e., among the PNRs of the flights due to depart in the predefined time-frame) those that are eligible for PAB service. To achieve this, the system according to the invention comprises means configured to perform a prior step consisting in adding a flag or any marker. PTI retrieves 172 all necessary information from the PNR database 110.

Once PAB eligible PNR are filtered, PTI pushes the PNRs flagged as PAB into a queue of an issuance plug-in module 132. The issuance plug-in is in charge of determining what segment(s) has to be priced and issued in the same e-ticket. This is achieved through an algorithm described below. A finite state machine is used to implement the algorithm. In case some segments are not selected by the algorithm and are still to be priced and issued, then at the next occurrence of the PTI, the process will be reiterated for these remaining segments.

Once the PAB segment(s) has been selected, the pricing and payment portal PPP 130 queries the fare quote system 120 to determine what fare applies to said selected PAB segment. Then, each PAB segment is priced 125.

The PPP 130 is configured to generate the corresponding ticket images. As mentioned above, ticket images are stored 134 in the coupon database 140. After pricing, transitional stored tickets (TST) contained in the PNR database are also updated 136.

Once the passenger passes the boarding gate with a PAB coupon the DCS considers that said coupon is used. The coupon status passes from "open" to "flown". The DCS then notifies a coupon status change to the coupon database CDB 144. Data storage means of the CDB 144 store said coupon status change.

The invention also comprises a transactions and sales reporting module or TSR 150 module. Said module is arranged for collecting, storing and reporting coupon status information delivered by the CDB. Thus, the TSR 150 module stores all sales done on the GDS system and delivers a report to the involved airline carriers 190 on completion of all PAB sales. A single and final report 152 is thus issued on the basis of the updates performed in the coupon database (CDB). It takes into account all coupon status changes that are reported by airport DCS 180 until boarding has completed.

In case the passenger does not board the coupon status stays "open". If the coupon status stays "open" while the control is given back to the e-ticket server then the system voids the coupon. In that case no debit settlement is triggered but the voided ticket is reported.

This mode of operation allows a drastic reduction of data exchanges with the carrier 190. As shown in next figure, a single reporting step is required without any further reconciliation needed between reported data and final status of the CDB.

The delivery of a single final report to the carrier greatly simplifies the carrier accounting which has only to deal with actual earned revenue. Besides, this allows reducing data storage requirements and processing load of the GDS computer platform.

The various modules communicate via EDIFACT messages. EDIFACT is a United Nation standard for electronic data interchanges. Its acronym is: "Échange de Données Informatisées pour l'Administration, le Commerce et le Transport ». Using such EDIFACT messages allows simplifying the implementation of the invention since it requires the communication of various modules that are run by different parties (GDS, airport, transportation carriers etc.)

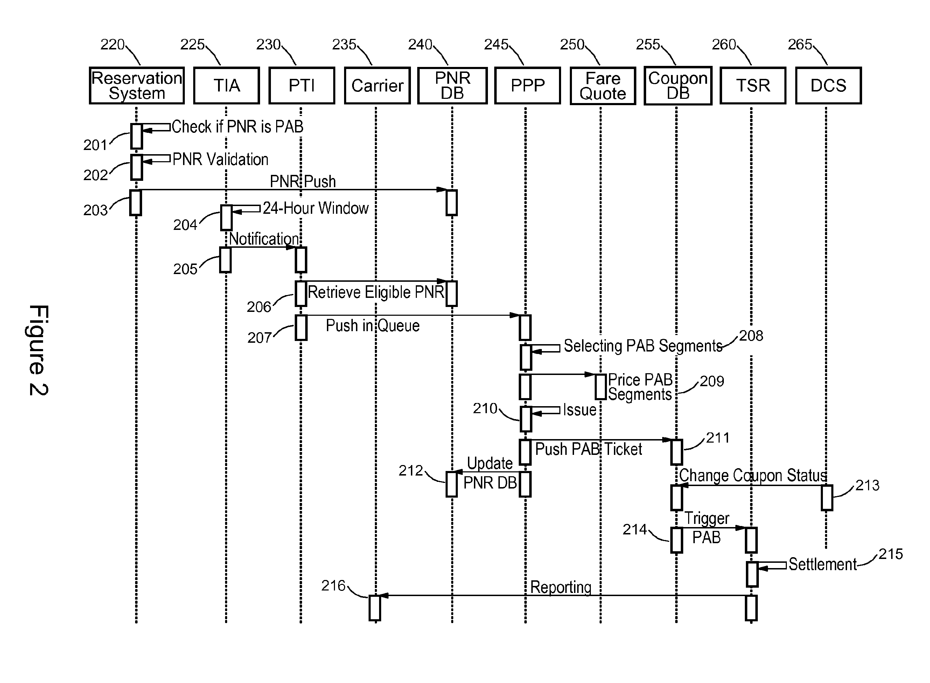

An example of system according to the invention has been described above with reference to FIGURE 1. An example of method that involves such system and that allows imbedding pay-as-you-board PNRs in the regular processing flow that handles all PNRs will now be detailed with reference to FIGURE 2.

The acting parties involved in the method are those already mentioned above. These are the GDS and its reservation system 220, the airline carrier 235 to which a reporting on the actual selling of ticket coupons is performed after boarding of a plane has completed and the departure control system 265 that informs the reservation system of the changes of coupon statuses while boarding is in progress.

The modules of the GDS reservation system more particularly involved in the processing of PAB PNRs have all been described in Figure 1 too. Namely, the TIA, PTI, PPP and TSR modules respectively referred to with following numerals in Figure 2: 225, 230, 245 and 260. The databases and their associated servers involved are the PNR database 240, the fare quote database 250 and the coupon database 255.

The first step 201 consists in checking while a new PNR is being generated if the end-client has indeed requested the benefit of the PAB service so as to be only charged for the coupons actually used of his/her travel itinerary as previously discussed. If this is the case a flag is set by the reservation system 220 or by the end-user to indicate that corresponding PNR is eligible for the pay-as-you-board service in order to be later processed accordingly. The flag is stored at the end of the PNR generation in the PNR database.

The second step 202 consists in validating the PNR to detect all inconsistencies before it is pushed in the PNR database at next step 203. These two steps are not different of the regular steps of the reservation process.

When the time initiated action module i.e. TIA 225 detects that a predetermined time window is entered 204, e.g., a 24-hour window prior to departure of a flight, a notification 205 is done to the module in charge of retrieving and filtering the PNRs eligible for the pay-as-you-board service, i.e., the PTI module 230. The retrieving is done at step 206 from the PNR database where all PNRs are stored. The PTI module 230 initiates that action of retrieving the eligible PNR.

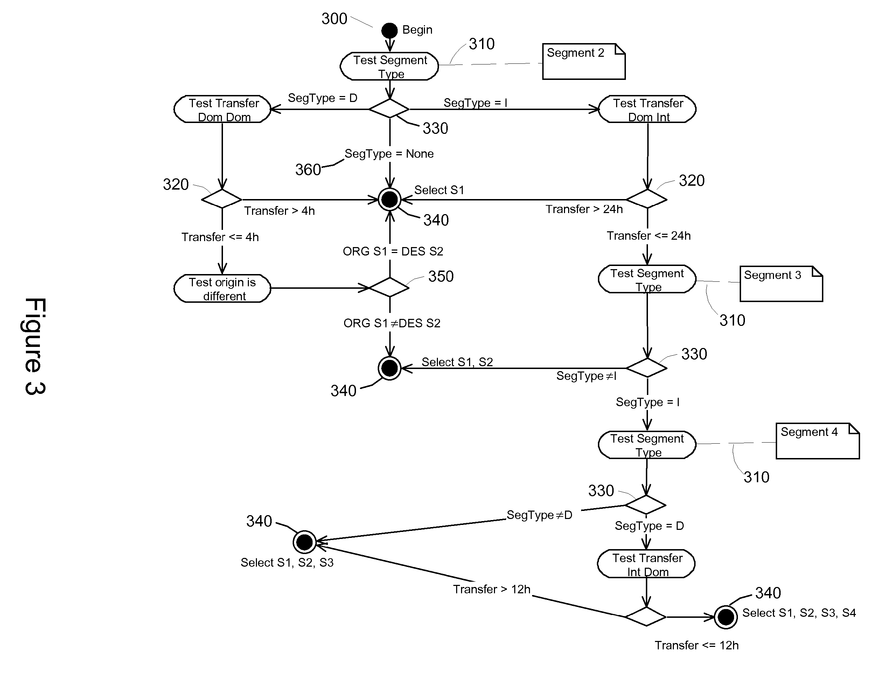

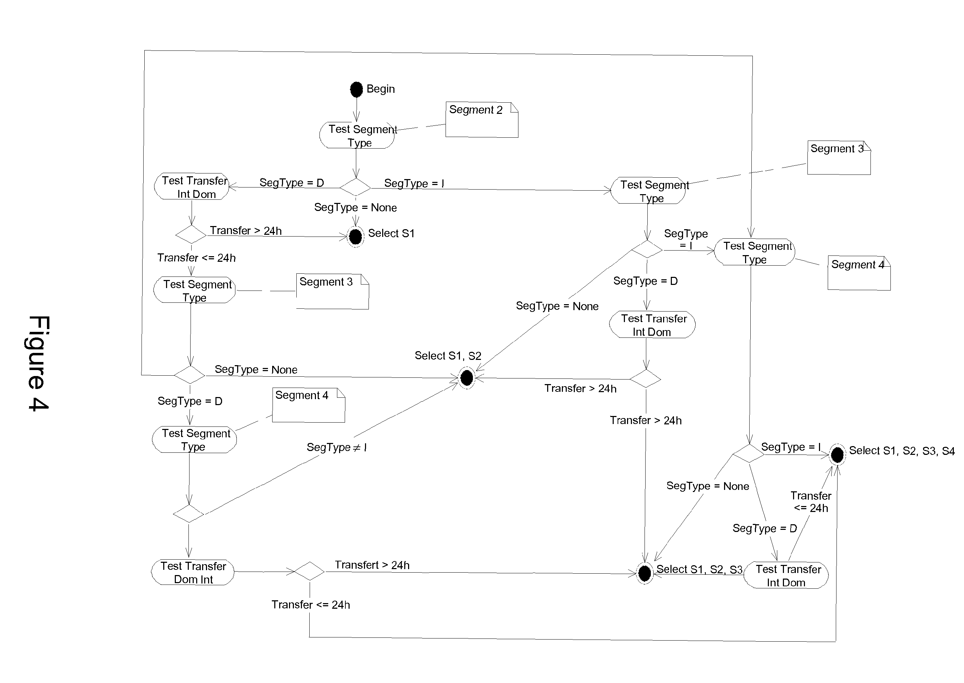

Then, at step 207 the PTI module put the eligible PNRs into a queue of the issuance plug-in module of PPP, i.e., the pricing and payment portal 245. PPP is in charge of identifying on which segments of an itinerary PAB service is actually applicable. Selection of the eligible PAB segments is performed at step 208 by specific algorithms. Two exemplary algorithms are described in Figures 3 and 4.

For the selected segments a separate pricing is done. To this end, at step 209 PPP queries the fare quote system and database 250 to retrieve the corresponding individual fares. When fares have been retrieved, PPP can then create and issue at next step 210 a transitional stored ticket or TST which is pushed 211 into the coupon database CDB and also used to update 212 the PNR database. The pricing and issuance steps follow conventional processes expected that a dedicated tag is transmitted to the e-ticket server. This dedicated tag indicates that the issued ticket corresponds to a pay-as-you-board service and that it must follow a specific monitoring. The transitional stored ticket TST carries said tag.

As mentioned above, the coupon database 255 holds an electronic form of the tickets (e-tickets) which can still be further modified. This is the case for the tickets eligible to PAB service. While boarding is in progress, coupon status changes are sent by the DCS 213. They carry the information that the passengers holding the virtual coupons have indeed been checked at boarding gate. When the e-ticket server receives a change of coupon status, the system checks whether the ticket carries a PAB tag. If this is the case the e-ticket server notifies the TSR (transactions and sales reporting) module 214 through a dedicated message.

All flown coupons are reported to the TSR. This is triggered when boarding is over and that a final settlement of the coupon statuses for the departing flight can be performed 215.

Finally, a comprehensive final billing file is created by TSR and sent to the airline carrier operating the flight 216.

More precisely this file is an accounting sales data summary file. Such file may follow industry standards that define its content and its layout. Widely used formats are for instance HOT and RET formats that are provided by IATA (International Air Transport Association). These formats are often customized according to airlines' specific requirements.

In case the flight status stays open after the control is given back to the e-ticket server, the system voids this ticket. In that case no payment settlement is triggered but the voided ticket is reported. Therefore the passenger will not be charged.

FIGURE 3 describes an exemplary algorithm used by the issuance plug-in of the pricing and payment portal (PPP) for selecting the segments of an e-ticket eligible for PAB service that can be priced and issued in the same ticket.

In general, these selection algorithms are tailored to be adapted to a particular airline and to its specific network of domestic and international flight connections. The exemplary algorithm of Figure 3 is a default algorithm that may apply when the first travel segment of a PNR is a domestic segment 300, i.e., a segment between cities within a same country. Then, the other segment types of the PNR are successively tested 310. The various tests performed to select and group segments eligible for PAB service are done on the basis of criterions including the available transfer time 320 between connecting flights and type of next segment 330, i.e.: domestic or international, to determine if next flight is between cities of different countries or not. Also, algorithm may include testing if there is a match between origin and destination of successive segments 350 so that to detect round trips. Then, the various segments of the PNR are selected and grouped as shown 340. Selection process ends when there is no next segment to test 360.

The overall objective of these algorithms is to select segments for which regrouping makes sense. This includes, but is not limited to, regrouping segments where check-in times are compatible and baggage transfer can be safely achieved. Hence, two successive international segments can be grouped together while international segments are grouped with a domestic segment only if the transfer time is below 24 hours in this exemplary algorithm. The aim is to process as a whole all the segments that should be impacted by the same event e.g. the passenger interrupts his journey or the passenger actually boards. Such algorithm enables to significantly simplify the processing of the issuance, pricing and payment steps while providing a high level of consistency.

For example, in case two domestic segments are separated by a short time and do not define a round trip, then the method assumes than after first segment the passenger is in transit. Therefore, it is very likely that he will stay at the airport and that he will board for second segment. On the contrary, in case the two domestic segments are separated by a longer time, it is likely that the passenger will leave the airport and that he will go about his work. Then, chances that he will not board for the second segment are higher. Therefore, second segment should not be issued and priced with first segment. Boarding for the first segment should not trigger the payment settlement for the second segment.

More precisely, the first algorithm can be described as follow.

The pricing and payment portal PPP first determines the type of segment 2 330.
- If segment 2 is international, then the transfer time is analyzed 320.
   ○ In case transfer time between segment 1 and segment 2 is longer than 24 hours, then only segment 1 is selected for issuance and pricing. PPP ends the process for this ticket.
   ○ In case transfer time between segment 1 and segment 2 is shorter than 24 hours, then segment 2 will be selected for issuance and pricing in same time as segment 1. The PPP also checks whether there is a third segment 310.
      ■ In case there is no segment 3 or in case segment 3 is not international, then only segments 1 and 2 are selected and the selection process ends 340.
      ■ In case there is segment 3 and in case segment 3 is international, then segments 1, 2 and 3 will be selected 340. PPP determines the type of segment 4.
         - In case segment 4 is not domestic then only segments 1, 2, 3 will be selected for pricing and issuance at the same time.
         - In case segment 4 is domestic and in case transfer time between segment 3 and 4 is longer than 12 hours, then only segments 1, 2, 3 will be selected for pricing and issuance at the same time.
         - In case segment 4 is domestic and in case transfer time between segment 3 and 4 is shorter than 12 hours, then segments 1, 2, 3, 4 will be all selected for pricing and issuance at the same time.

The process ends when there is no additional segment or when the additional segment is not selected.
- If segment 2 is not domestic, then the transfer time is analyzed 320.
   ○ In case transfer time between segment 1 and segment 2 is longer than 4 hours, then only segment 1 is selected for issuance and pricing. PPP ends the process for this ticket.
   ○ In case transfer time between segment 1 and segment 2 is shorter than 4 hours, then PPP tests whether the origin of segment 1 (ORG1) is identical to the destination of segment 2 (DES2) 350.
      ■ In case ORG1 is identical to DES2, then segments 1 and 2 correspond to a round trip journey. Therefore, segments 1 and 2 must be issued and priced separately in order to allow the passenger to cancel his return without being charged. Consequently, only segment 1 is priced and issued.
      ■ In case ORG1 and DES2 are different, then segments 1 and 2 do not correspond to a round trip journey. Therefore, segments 1 and 2 are priced and issued together.
- If type of segment 2 is "none", then PPP considers that there is no segment 2. Therefore, only segment 1 is selected for further pricing and issuance.
In case all segments are not selected, then the algorithm will be reiterated at next occurrence of TIA until all segments are finally selected for further pricing and issuance.

FIGURE 4 describes another exemplary algorithm for selecting the segments of a passenger itinerary eligible for PAB service which applies when the first segment is an international segment. The criterions for regrouping the segments are roughly similar to the ones of previous figure.

By grouping and processing all together a subset of segments, the invention allows limiting the data exchanges required for the pricing, issuance, reporting and payment steps. Consequently, transmission and storage capacities of the databases and servers of the various modules (in particular: PPP, CDB, TSR, carrier reporting module) and the processing power can be reduced.

These algorithms can be customized according to specific requirements of carriers, airports, corporate policies etc.

## Claims

1. A method for settling the payment of a travel e-ticket of a transportation carrier **characterized in that** it comprises the steps of:
identifying (201) passenger name records (PNRs) that are eligible for a late payment (PAB) service in a passenger name records database, each
passenger name record (PNR) being associated to at least one segment,
when a predetermined event occurs prior to transportation carrier departure,
retrieving from the passenger name record (PNR) database all passenger name records (PNRs) eligible for the late payment (PAB) service (206);
for each retrieved passenger name record (PNR), selecting through an algorithm at least one segment that can be priced;
pricing said segment;
issuing a coupon associated to said segment;
at issuance, updating the passenger name record (PNR) database with issuance information concerning said segment;
upon completion of boarding,
voiding all travel coupons (213) for which no change of coupon status has been reported by an airport departure control system (DCS) handling the carrier departure;
receiving from the airport departure control system (DCS) a change of coupon status indicating that the coupon has been used, then triggering a reporting (214) to a transactions and sales reporting module (TSR) (260) of segments for which a change of coupon status has been reported by departure control system (DCS);
settling the payment of coupons (215) for which a change of status has been reported on the basis of the prices determined at pricing step.

2. The method of claim 1 including a further step of reporting to a transportation carrier accounting system the payment settlement (216) of the coupons for which a change of coupon status has been reported by the airport departure control system (DCS).

3. The method of claim 1 including a further step of reporting to a transportation carrier accounting system the voiding of the coupons for which no change of coupon status has been reported by the airport departure control system (DCS).

4. The method of claim 1 wherein the predetermined event consists in entering a predetermined time window.

5. The method of claim 1 wherein the predetermined event consists in beginning the passenger check-in.

6. The method of claim 1 wherein the various steps are carried out by different modules communicating via EDIFACT messages.

7. The method of claim 1 wherein the change of coupon status indicating that the coupon has been used is received (213) at a coupon database (CDB) (255) of an electronic-ticket server, wherein the coupon database (CDB) (255) notifies (214) the change of coupon status to the transactions and sales reporting module (TSR) (260) which launches the payment settlement (215) and the reporting of said settlement (216) to the transportation carrier (235).

8. The method of claim 1 wherein, upon issuance of a coupon associated to a passenger name record (PNR) eligible for the late payment (PAB) service, a dedicated tag is associated to said coupon.

9. The method of claim 8 wherein when a change of any coupon status is received at a coupon database (CDB) (255) of an electronic-ticket server, the electronic-ticket server checks whether the coupon carries said tag.

10. The method of claim 9 wherein in case said tag is identified then the electronic-ticket server notifies the change of coupon status to the transactions and sales reporting module (TSR) (260) for further payment settlement and reporting.

11. The method of claim 1 wherein the step of selecting segments to be priced includes performing a selection of segments that correspond to a same e-ticket on the basis of whether said segments correspond to flights that are domestic or international flights (330).

12. The method of claim 1 or 11 wherein the step of selecting segments to be priced includes performing a selection of segments that correspond to a same e-ticket on the basis of an available transfer time between connecting flights (320).

13. The method of claim 12 wherein the step of selecting segments to be priced includes performing a selection of segments that correspond to a same e-ticket on the basis of whether origins and destinations of travel segments match or not (350).

14. A system for settling the payment of a travel e-ticket of a transportation carrier **characterized in that** it comprises :
data storage means for storing passenger name records (PNR) in a database (240);
means for identifying (201) passenger name records (PNRs) that are eligible for a late payment (PAB) service in said database (240), each passenger name record (PNR) being associated to at least one segment,
means for detecting (225) when a predetermined event occurs prior to transportation carrier departure,
a server associated to said database (240) and arranged for retrieving (230) from said database (240) all passenger name records (PNRs) eligible for the late payment (PAB) service (206);
means for selecting (245) through an algorithm at least one segment that can be priced for each retrieved passenger name record (PNR);
means for pricing (245) said segment;
means for issuing (PPP) (245) a coupon associated to said segment;
means for updating said database (240) with issuance information concerning said segment;
means for voiding all travel coupons (213) for which no change of coupon status has been reported by an airport departure control system (DCS) (265) handling the carrier departure;
means for receiving from the airport departure control system (DCS) (265) a change of coupon status indicating that the coupon has been used, then triggering a reporting (214) of the segments for which a change of coupon status has been reported by departure control system (DCS) (265);
means for settling the payment of coupons (215) for which change of status has been reported on the basis of the prices determined by the means for pricing (245).

15. A computer program product stored on a computer readable storage medium, comprising computer readable code means for causing at least one computer to operate the method of any one of claims 1 to 13.
